Europäisches Patentamt

European Patent Office

Office européen des brevets

(19)

(11) **EP 1 120 331 B1**

(12) **EUROPEAN PATENT SPECIFICATION**

(45) Date of publication and mention
of the grant of the patent:
**10.12.2003 Bulletin 2003/50**

(51) Int Cl.⁷: **B60R 21/34**, B60R 19/14,
B62D 25/10, B62D 25/12

(21) Application number: **01300604.4**

(22) Date of filing: **24.01.2001**

(54) **Front hood structure for vehicle**

Fahrzeug-Motorhaube

Capot pour un véhicule

(84) Designated Contracting States:
**DE FR GB**

(30) Priority: **28.01.2000 JP 2000020797
22.11.2000 JP 2000356543**

(43) Date of publication of application:
**01.08.2001 Bulletin 2001/31**

(73) Proprietor: **NISSAN MOTOR COMPANY, LIMITED
Yokohama-shi, Kanagawa 221-0023 (JP)**

(72) Inventors:
• **Asai, Toshiyuki
Zushi-shi, Kanagawa-ken (JP)**
• **Maki, Tetsuo
Yokosuka-shi, Kanagawa-ken (JP)**
• **Matsuura, Yasuki
Yokohama-shi, Kanagawa-ken (JP)**

(74) Representative: **Godwin, Edgar James
MARKS & CLERK,
57-60 Lincoln's Inn Fields
London WC2A 3LS (GB)**

(56) References cited:
FR-A- 2 621 677        US-A- 4 950 522

• **PATENT ABSTRACTS OF JAPAN vol. 009, no.
007 (M-350), 12 January 1985 (1985-01-12) & JP
59 156872 A (NISSAN JIDOSHA KK), 6
September 1984 (1984-09-06)**

## Description

The present invention relates to a front hood structure for a vehicle and the vehicle having the front hood structure.

Japanese Patent Publication (kokai) No. 10-7027 discloses a front hood which also operates as a safety device for absorbing an impact on a walker when a traveling vehicle has a collision with the walker.

In this front hood, an inner panel and an outer panel are welded to each other or connected with each other through a hemming joint at the front end of the front hood. Further, on the upside of a. substantially intermediate portion of the inner panel, there is arranged either at least one channel member, which is different from the inner panel and also welded in the left-and-right direction of the vehicle, or a cut-and-raised structure formed by the inner panel. At the vehicle collision, the channel member or the cut-and-raised structure operates to distribute a reactive force of the outer panel against a collision load due to an object tumbling onto the outer panel,thereby to reduce a bending moment on the object owing to the formation of "reactive force" points more than three.

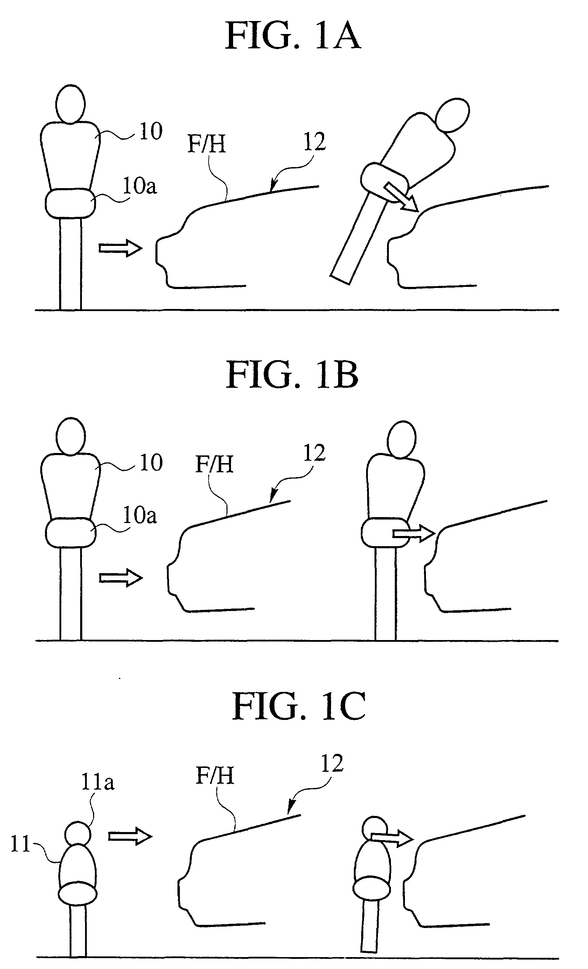

As shown in Fig. 1A, when a traveling vehicle 12 collides with a well-built walker (e.g. an adult) 10 or the like, the walker 10 is subjected to a first collision by an automotive bumper and,thereafter, the walker's femur or lumbar region 10a of relatively large mass collides against the front part of a front hood F/H with a relatively large collision energy.

In such a case that the walker or the like collides against the front part of the hood from obliquely upward thereof, the above-mentioned conventional front hood is capable of improving an efficiency to absorb such a relatively large energy owing to its reduction of bending moment.

Meanwhile, as has been discussed in Europe, when the vehicle collides with a small object 11a, for example, a child, there is a possibility that the small object collides with the front end of the hood to a direction in generally parallel with the vehicle traveling direction. Taking such a situation into consideration, it has been desired to provide a front hood structure which is capable of improving efficiencies to absorb a relatively small energy like this and also absorb collision energy when the above-mentioned object of large mass collides with the vehicle from its front side.

US-A-4 950 522 discloses a front hood structure in accordance with the preamble of claim 1.

Under the above circumstance, it is an object of the present invention to provide a front hood which is capable of improving its energy absorbing efficiency in case of the occurrence of collision of an object with the vehicle from obliquely upward with a relatively large energy and the energy absorbing efficiency in case of the occurrence of collision of another object with the vehicle from its general front side with a relatively small energy.

According to the present invention, the above-mentioned object is accomplished by a front hood structure as set forth in claim 1.

Furthermore, there is also provided a vehicle having a front hood with this structure.

BRIEF DESCRIPTION OF THE DRAWINGS

Figs. 1A, 1B, and 1C are respective conceptual views showing various walkers' actions at vehicle collision, respectively;
Figs. 2A and 2B are sectional views of the front hood structure in accordance with the first embodiment of the present invention;
Fig. 3 is a perspective view showing the front hood structure of the first embodiment;
Fig. 4 is a sectional working view of the front hood structure of the first embodiment;
Fig. 5 is a sectional working view of the front hood structure of the first embodiment;
Fig. 6 is a sectional working view of the front hood structure of the first embodiment;
Fig. 7 is a sectional working view of the front hood structure of the first embodiment;
Fig. 8 is a graph showing the relationships between loads and strokes at the front hood collision;
Fig. 9 is a sectional view of the front hood structure in accordance with the second embodiment of the present invention;
Fig. 10 is a sectional working view of the front hood structure of the second embodiment;
Fig. 11 is a sectional view of the front hood structure, showing the dimensional relationship between a wall length of a reinforcement and an inner panel having the reinforcement arranged thereon;
Fig. 12 is a sectional view of the front hood structure in accordance with the third embodiment of the present invention;
Fig. 13 is a perspective view of the front hood structure in accordance with the third embodiment of the present invention;
Fig. 14 is a sectional view of the front hood structure in accordance with the fourth embodiment of the present invention;
Fig. 15 is a sectional view of the front hood structure in accordance with the fifth embodiment of the present invention;
Fig. 16 is a perspective view of the front hood structure in accordance with the fifth embodiment of the present invention;
Figs. 17A to 17D are explanatory views showing the arrangements of beads of a wall surface of the sixth embodiment of the present invention;
Figs. 18A and 18B are perspective and sectional views of the front hood structure in accordance with the seventh embodiment of the present invention, respectively;

Figs. 19A and 19B are sectional and perspective views of the front hood structure in accordance with the eighth embodiment of the present invention, respectively;

Figs. 20A and 20B are perspective and sectional views of the front hood structure in accordance with the ninth embodiment of the present invention, respectively; and

Fig. 21 is a perspective view of the front hood structure in accordance with the tenth embodiment of the present invention.

## DESCRIPTION OF THE PREFERRED EMBODIMENTS

Referring to accompanying drawings, various embodiments of the present invention will be described below.

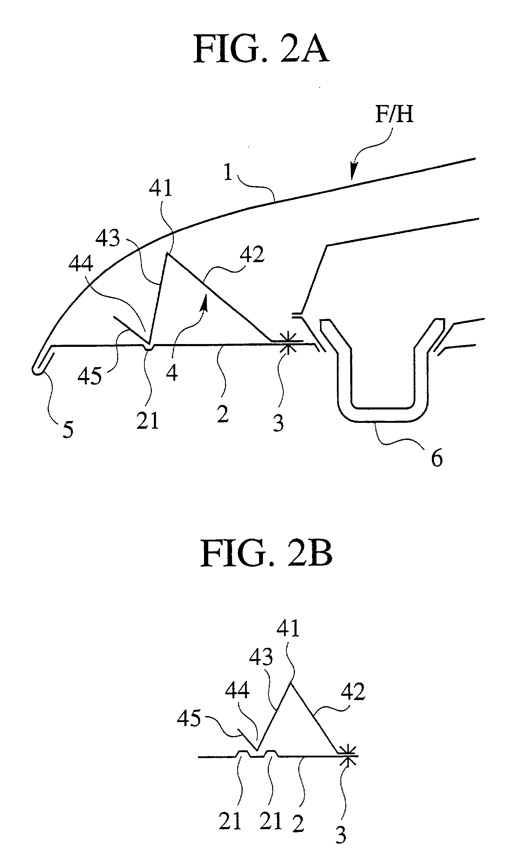

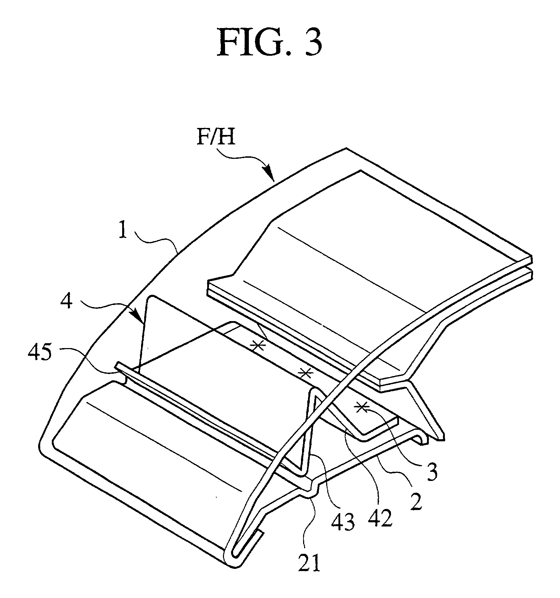

Figures 2A, 2B,and 3 show a front hood structure for a vehicle, in accordance with the first embodiment of the present invention.

In this front hood structure, an outer panel 1 and an inner panel 2 form a front hood F/H. On the front side of the front hood F/H, a reinforcement 4 is arranged between the outer panel 1 and the inner panel 2, as an energy absorbing mechanism of the front hood structure. In this embodiment, the inner panel 2 has a front part formed to extend from a hood lock 6 to a hemming joint 5 at the front end of the hood, substantially horizontally. The reinforcement 4 is arranged on the front part of the inner panel 2.

The reinforcement 4 has a first bending part 41 and is shaped to be triangular in side view. The first bending part 41 is formed to project toward the outer panel 1 and also defined by a rear wall 42 and a front wall 43. The rear wall 42 has its terminal welded to the inner panel 2 in the vicinity of the hood lock 6, providing a fixing part 3.

On the other hand, the front wall 43 has its terminal defined as a second bending part 44 of the reinforcement 4. On the front side of the second bending part 44, a wall 45 is formed to be generally parallel with the rear wall 42 behind the first bending part 41. Thus, the reinforcement 4 is generally N-shaped in side view.

The inner panel 2 is provided, in the vicinity of the hemming joint 5, with an engaging part 21 which extends in a direction of the vehicle's width (referred "vehicle width direction" later), for engagement with a top of the second bending part 44 of the reinforcement 4.

In Fig. 2A, the engaging part 21 is formed by a groove of a bead formed on the inner panel 2 to project downward. In a modification, the same part 21 may be formed by another groove between a pair of beads juxtaposed on the inner panel 2 to project upward, as shown in Fig. 2B.

When the traveling vehicle collides with a walker, such as walker of grown-up build, a relatively large mass (e.g. walker's femur or hips) subsequent to the first collision between the walker and an automotive bumper is applied on the front part of the front hood F/H from the upside obliquely to the vehicle's traveling direction, as shown in Fig. 1A.

Then, although the direction of collision meets the vehicle's traveling direction at angles, it has been already introduced by various documents that this collision angle changes dependently of a walker's build, a velocity of collision, a length of the bumper, a height of the hood's front end, etc.

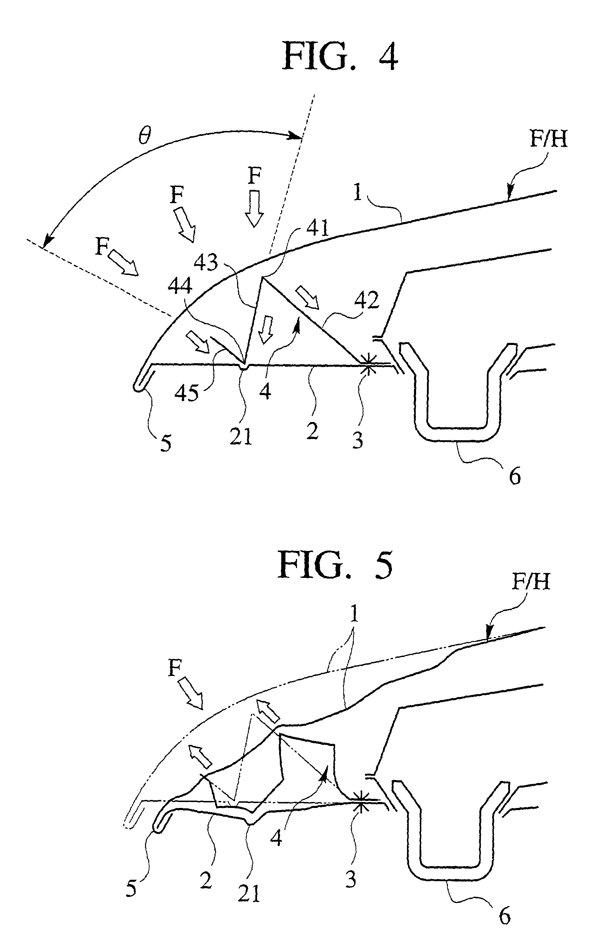

According to this embodiment, repeatedly, the reinforcement 4 is substantially N-shaped and the first bending part 41 is shaped so as to be triangular by the walls 42, 43 meeting each other at angles, as shown in Figs. 2A, 2B,and 3. Further, the terminal of the rear wall 42 is welded to the inner panel 2, while the top of the second bending part 44 formed at the terminal of the wall 43 is engaged in the engaging part 21. Accordingly, as for the upper collision, the input can be ensurely transmitted to the inner panel 2,thereby accomplishing the buckling of the walls due to the occurrence of reactive force appropriately. Moreover, for not only collision load from the perpendicular direction to the outer panel 1 but also collision loads from various angles represented by arrows F of Fig. 4, the walls 42, 43 can buckle into deformation (see Fig. 5) thereby to carry out the energy absorption against various collisions from a wide angle θ effectively.

Since the wall 45 in front of the second bending part 44 is generally parallel to the wall 42 behind the first bending part 41, not only does the wall 45 buckle into deformation,thereby to enhance the energy absorbing effect, but also the occurrence area of reactive force is dispersed by the first bending part 41 and the wall 45, thereby to obtain the effect to reduce a moment.

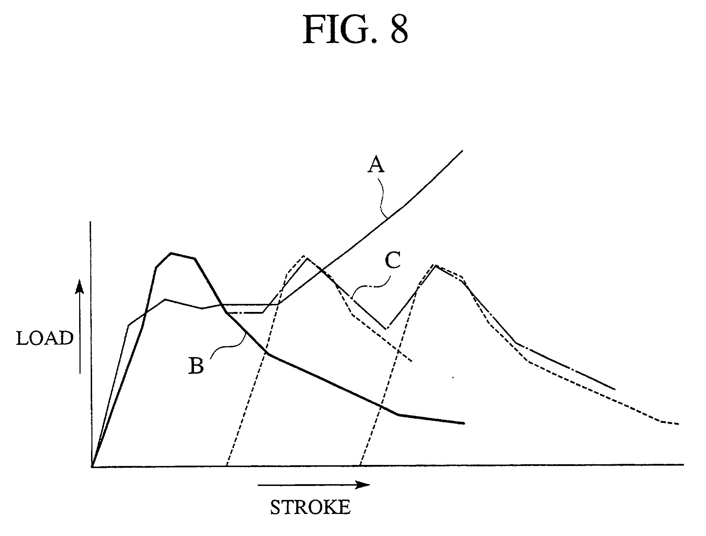

Fig. 8 shows a load/stroke diagram in case of the occurrence of collision of relatively large energy with the front part of the front hood from its obliquely upside with respect to the vehicle traveling direction.

In Fig. 8, a line A designates an energy-absorbing characteristic of the front hood without the reinforcement 4, showing a load being elevated by the abutment of the outer panel against the bottom of the structure. While, a line B designates an energy-absorbing characteristic of the front hood with the reinforcement 4. According to the embodiment, the collision load is initially elevated owing to the beginning of the buckling of the reinforcement 4 and,thereafter, the load at the outer panel's contact with the bottom can be reduced owing to the energy-absorbing effect of the buckled reinforcement 4.

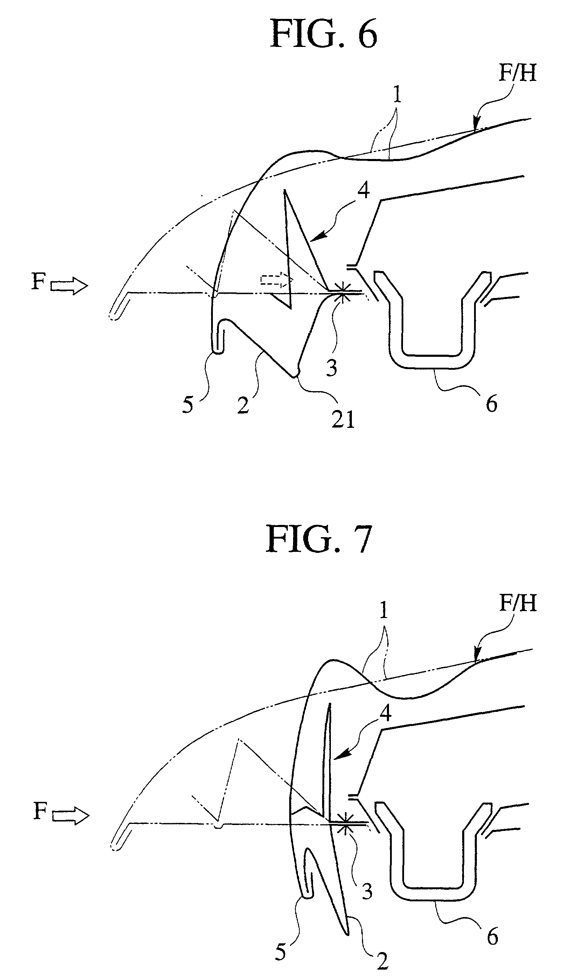

On the other hand, when absorbing the front collision energy due to a relatively small mass like a child, in other words, absorbing a relatively small collision energy, the inner panel 2 is bent into deformation including a groove of the engaging part 21 as starting point, as shown in Fig. 6. Consequently, due to this buckling press, a relatively-small reactive force is produced.

Then, the second bending part 44 is detached from the groove of the engaging part 21 simultaneously with the pressing of the inner panel 2. As a result of bending at the second bending part 44 and the first bending part 41, the reinforcement 4 is subjected to compressive deformation to fold the walls 45, 43, 42 in the vehicle fore-and-aft direction. In this way, before the contact of the reinforcement 4 with the hood lock 6 to cause a high reactive force, it is possible to accomplish ideal energy absorption exhibiting a reduced reactive force in the vehicle fore-and-aft direction.

Particularly, since the inner panel 2 is bent into deformation with the groove of the engaging part 21 as the starting point at the front collision, the compressive deformation of the reinforcement 4 in the vehicle fore-and-aft direction can be carried out more systematically.

In case of the front collision with a relatively large energy, as shown in Fig. 7, the reinforcement 4 comes into contact with the high-rigidness hood lock 6 to generate a high reactive force, owing to the structure where the rear end of the reinforcement 4, i.e. the terminal of the wall 42 is welded to the inner panel 2 in the vicinity of the front part of the hood lock 6. That is, against the front collision with a relatively large energy, the above front hood structure allows the reinforcement 4 to be buckled in the vehicle fore-and-aft direction, improving the energy absorbing efficiency.

In this way, according to the embodiment, it is possible to attain the ideal energy absorbing performance against both upper collision and front collision. Additionally, since the walls 42, 43 of the reinforcement 4 forming the energy absorbing mechanism are arranged to extend on both sides of the first bending part 41 with different inclining directions, it is possible to simplify the wide-angle arrangement of the walls 42, 43 and also possible to provide the reinforcement 4 with a compact structure.

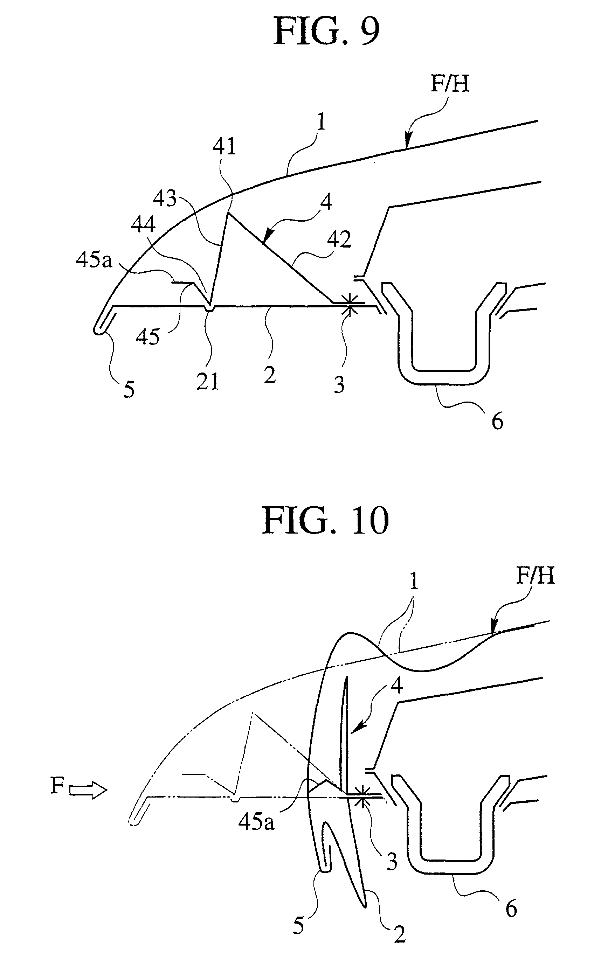

In accordance with the second embodiment shown in Fig. 9, a generally horizontal flange 45a is formed on an upper end of the wall 45 in front of the second bending part 44.

Also in this embodiment of the invention, the hood structure has effects similar to those of the first embodiment. In addition, for the front collision of a relatively large energy, the flange 45a is buckled to produce the reactive force at the time of the whole contact of the reinforcement 4 with the hood lock 6 of high rigidness (see Fig. 10), thereby improving the energy absorbing efficiency furthermore.

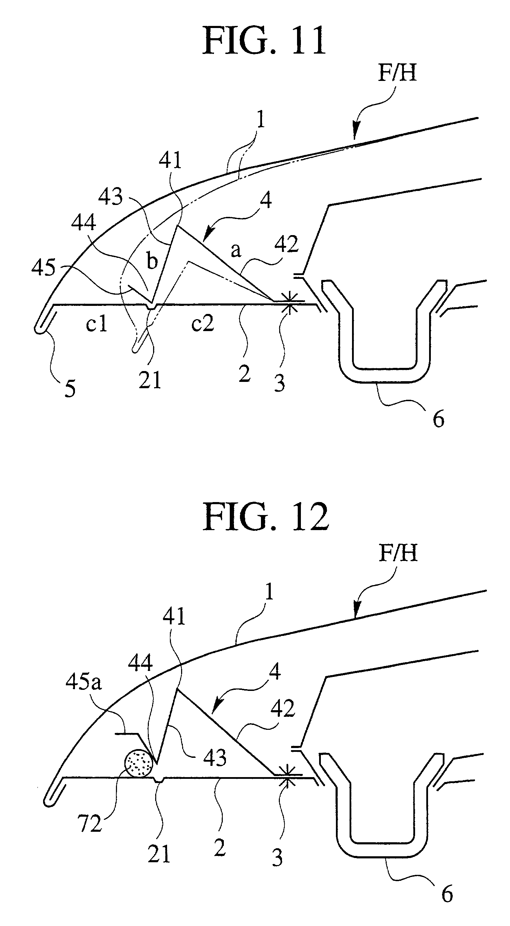

In either one of the above-mentioned embodiments, the following relationships are established providing that a length of the rear wall 42 forming the first bending part 41 is represented by "a", a length of the front wall 43 of the first bending part 41 "b", a length from the hemming joint 5 at the front end of the inner panel 2 to the groove of the engaging part 21 "$c_1$", and a length

from the groove to fixing part 3 of the rear wall behind the first bending part 41 "$c_2$", as shown in Fig. 11.

$$a \geqq b \; ; a \geqq c_2 ; c_1 \geqq b$$

With the establishment of relationships, even when the inner panel 2 is deformed upward about the groove of the engaging part 21 as the starting point by the front collision (see a broken line of Fig. 11), the inner panel 2 can be prevented from interfering with the walls 42, 43 of the reinforcement 4, accomplishing the shrinkage of the reinforcement 4 in the fore-and-aft direction appropriately.

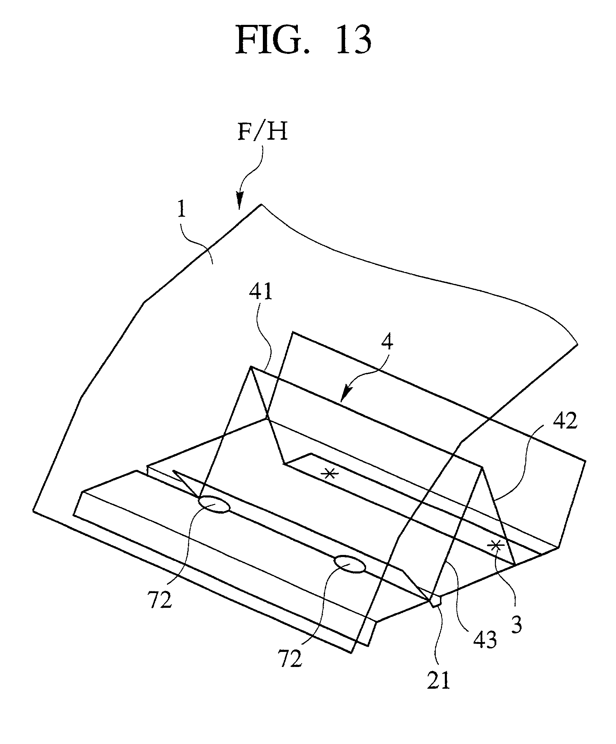

In common with the first and second embodiments, the peak of the second bending part 44 of the reinforcement 4 engages in the groove of the engaging part 21 of the inner panel 2. In the modification, as the third embodiment shown in Figs. 12 and 13, the peak of the second bending part 44 may be glued to the inner panel 2 on the front side of the groove through a glutinous adhesive, such as mastic seals 72.

Then, besides the similar effects of the first and second embodiments, the bonding of the second bending part 44 to the inner panel 44 through the mastic seals 72 allows to prevent the occurrence of noise at the vehicle's traveling. Additionally, even if the compressive collision load of the upward-and-downward direction is applied on the reinforcement 4 at the upside collision, there is no possibility that the peak of the second bending part 44 is detached from the groove of the engaging part 21, accomplishing the load transmission for the inner panel 2 surely.

While, since a shearing load is exerted on the bonding parts of the mastic seals 72 at the front collision, the mastic seals 72 can be peeled off the inner panel 2,thereby allowing the reinforcement 44 to be deformed compressively.

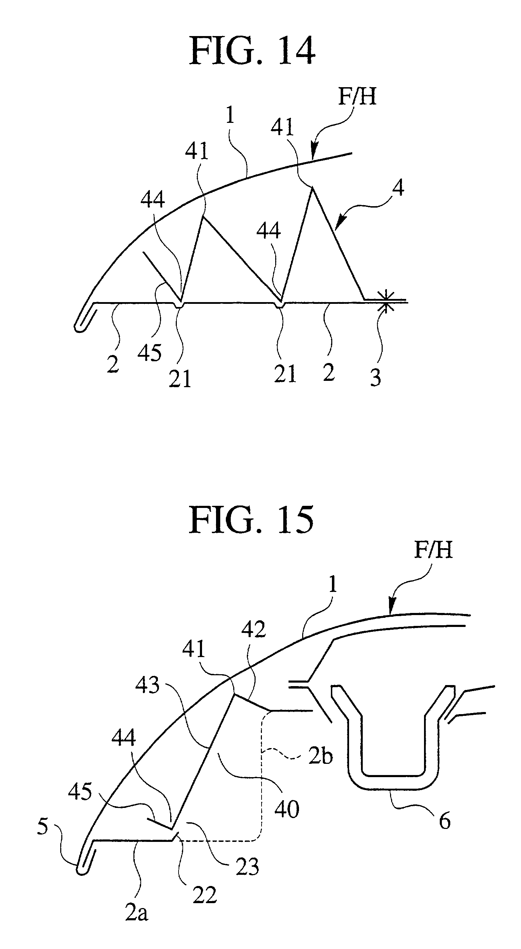

Fig. 14 shows the fourth embodiment of the invention,where the reinforcement 4 is provided with the first bending parts 41 and the second bending parts 44 arranged alternately in the vehicle fore-and-aft direction, forming a W(or M)-shaped configuration in side view.

Then, in addition to the effects of the first and second embodiments, it is possible to further enlarge a wide-angle buffer zone against the upside collision in the fore-and-aft direction and also possible to diffuse the occurrence parts of the reactive force thereby enhancing the moment reducing effect.

Regarding the energy absorbing characteristics, as shown with a line C in Fig. 8, a plurality of load peaks can be produced, thereby to increase an amount of energy on absorption. Moreover, when adjusting heights of the respective first bending parts 41, it is possible to control the transmitting of loads with ease.

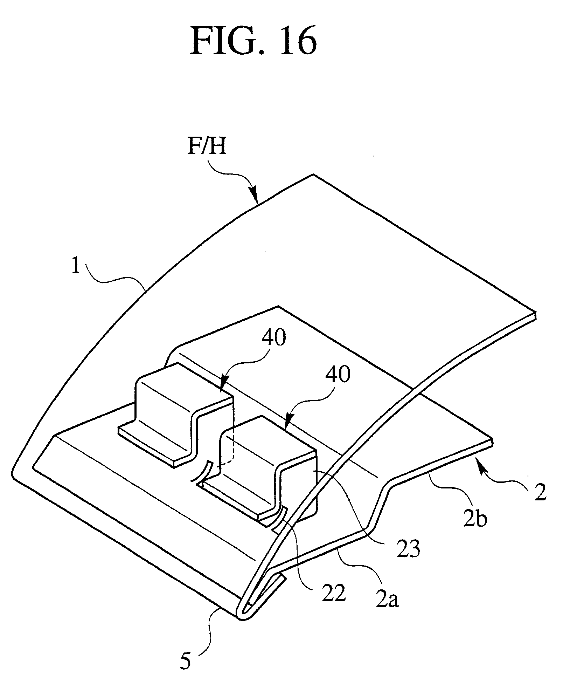

Figs. 15 and 16 show the fifth embodiment where the present invention is applied to a so-called "slant-nose" type front hood having its front end rolling downward in front of the hood lock 6.

As shown in Fig. 15, the front part of the inner panel 2 has a horizontal part 2a extending from the hemming joint 5 toward the rear part of the vehicle horizontally and a rising part 2b rising from the rear end of the horizontal part 2a toward the hood lock 6 obliquely behind, providing a step structure.

The energy absorbing mechanism is formed by a cut-and-raised structure 40. In the structure 40, an opening 23 is formed so as to extend from the generally intermediate (in the fore-and-aft direction) part of the horizontal part 2a to the upper end of the rising part 2b.

The cut-and-raised structure 40 includes a first bending part 41 projecting toward the outer panel 1 and a second bending part 44 connected to the first bending part 41 through the wall 43 to project toward the horizontal part 2a of the inner panel 2. In side view of Fig. 15, the first bending part 41 is triangular-shaped by the front wall 43 and the rear wall 42.

The rear wall 42 is not cut away from the inner panel 2, while the front wall 43 is cut off from the inner panel 2,thereby to define the second bending part 44. The inner panel 2 is provided, at a front end of the opening 23, with a claw part 22 for engagement with the second bending part 44.

Again, on the front side of the second bending part 44, the wall 45 is formed so as to be generally parallel with the rear wall 42 of the first bending part 41.

The cut-and-raised structure 40 may be provided,in a modification, as a plural. Fig. 16 shows an arrangement where two cut-and-raised structures 40 are formed in the vehicle width direction.

Accordingly, also in the fifth embodiment, there can be obtained effects similar to those of the first embodiment. Thus, it is possible to improve the energy absorbing efficiency of the front hood structure against the upside collision (relatively large energy) that the object collides with the front part of the front hood within a wide-angle range (including the generally forward direction). For the front collision, since the second bending part 44 is detached from the claw part 22,thereby allowing the shrinkage of the structure 40 in the fore-and-aft direction, it is possible to improve the energy absorbing efficiency of the front hood structure against the front collision.

According to the embodiment, with the adoption of the cut-and-raised structure 40 resulting from the formation of the opening 23 in the inner panel 2, there is no need to prepare any exclusive member for the energy absorbing mechanism, whereby the front hood structure has advantages in weight and cost.

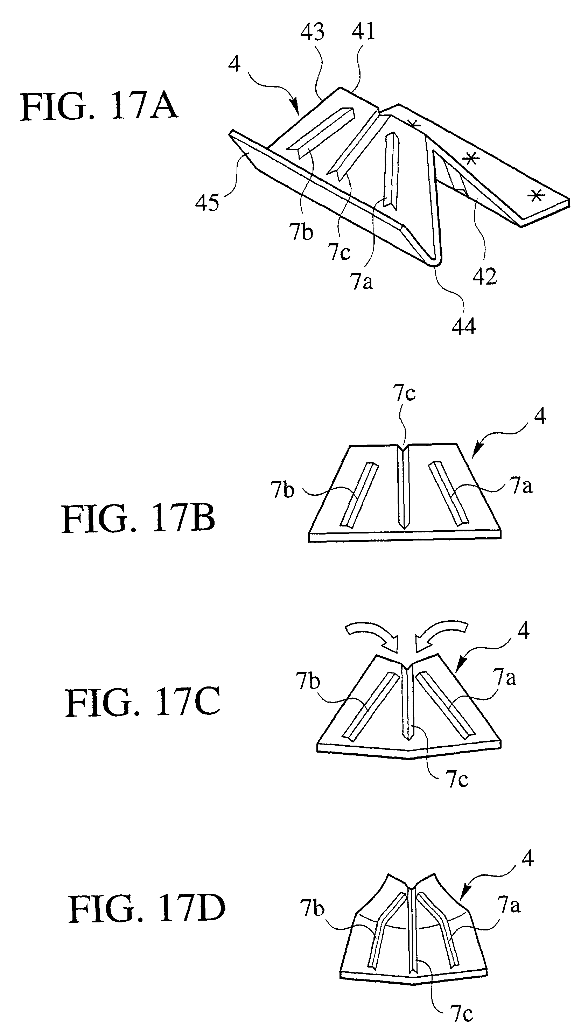

Figs. 17A to 17D show the sixth embodiment of the invention,where the reinforcement 4 or the cut-and-raised structure 40 of the previous embodiments is provided, on the walls 42, 43 of the first bending part 41, with a bead 7c which induces the vertical buckling of the walls 42, 43 and beads 7a, 7b which induce the lateral buckling of the walls 42, 43.

In this embodiment, the front and rear walls 42, 43 of the first bending part 41 are shaped so as to be upward trapezoids in front view. On the walls 42, 43, the beads 7a, 7b for inducing the lateral buckling are formed so as to project upward and also converge each other as they approach the peak of the first bending part 41. While, between the beads 7a and 7b, the bead 7c for inducing the vertical buckling is formed so as to dent through the walls 43, 42 continuously.

According to the sixth embodiment, when the front hood structure is subjected to the previously-mentioned upside collision, the walls 42, 43 are deformed in multi-stages by the beads 7a, 7b, 7c as the starting points of vertical and lateral buckling, whereby the energy absorption can be performed efficiently.

In detail, as shown in Figs. 17B and 17C, the vertical buckling is firstly induced by the dented bead 7c extending through the walls 42, 43 and, thereafter, the vertical buckling is shifted to the lateral buckling since the upper end of the projecting bead 7a interferes with the upper end of the projecting bead 7b. During the lateral buckling, as shown in Fig. 17D, the walls 42, 43 can be deformed from upside to downside in order, owing to the trapezoid configurations, accomplishing the energy absorption more effectively.

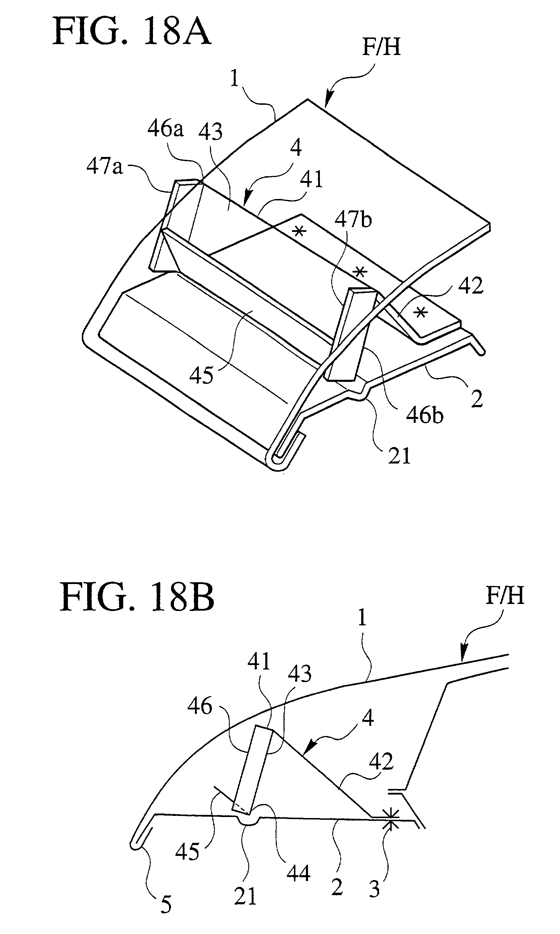

Figs. 18A and 18B show the seventh embodiment of the invention. In this embodiment, vertical walls 47a, 47b are formed on both ends of the front wall 43 in the vehicle width direction, through folding parts 46a, 46b, respectively.

Alternatively, the vertical walls 47a, 47b may be provided on the rear wall 42. Owing to the adoption of the reinforcement 4 similar to that of the first embodiment, the seventh embodiment has effects similar to those of the first embodiment. In addition, for the front collision and the upside collision of relatively large energy, the vertical walls 47a, 47b of the reinforcement 4 can be buckled in the fore-and-aft direction and the upward-and-downward direction respectively, accomplishing the energy absorption more effectively.

Note, the provision of the vertical walls 47a, 47b of this embodiment may be applied to the cut-and-raised structure 40 as shown in Figs. 15 and 16.

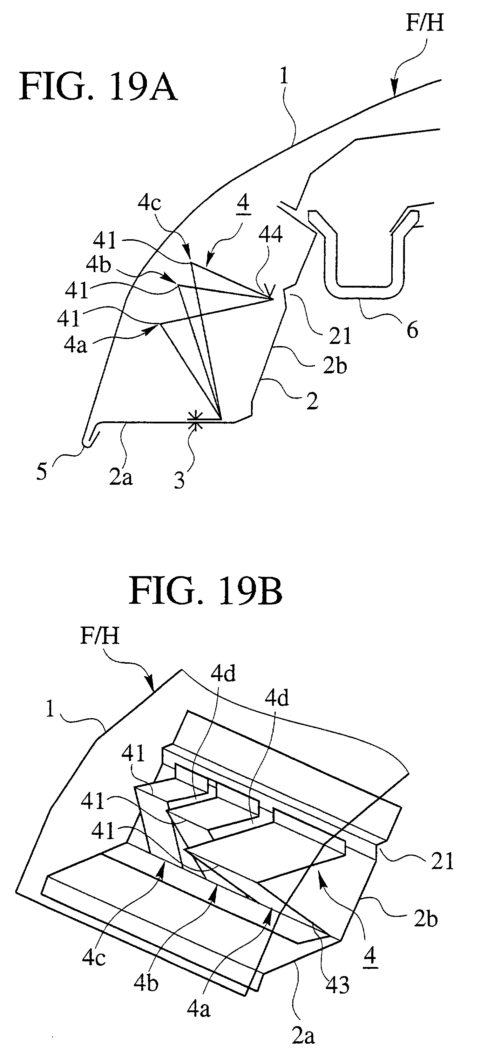

Figs. 19A and 19B show the eighth embodiment,where the present structure is applied to the slant-nose type front hood F/H as shown in Figs. 15 and 16.

According to the embodiment, the reinforcement 4 is arranged to extend over the horizontal part 2a and the rising part 2b of the inner panel 2.

The reinforcement 4 has the first bending part 41 projecting toward the outer panel 1 and the second bending part 44 formed on the terminal of the rear wall 42 of the first bending part 41 to project toward the inner panel 2. Similarly to the first embodiment, the first bending part 41 is triangular-shaped in side view by the front wall 43 and the rear wall 42.

The end of the front wall 43 is welded to the horizontal part 2a of the inner panel 2, providing the fixing part 3. On the other hand, the rising part 2b is provided with the engaging part 21 in the form of a bead projecting upward and also extending in the vehicle width direction. The top of the second bending part 44 is engaged with the engaging part 21.

Leaving the fixing part 3, the reinforcement 4 has slits 4d extending from the second bending part 44 to provide a plurality of reinforcing elements 4a-4c in the vehicle width direction.

The reinforcing elements 4a-4c are respectively established to have different ratios of the front wall 43 to the rear wall 42 in length. In detail, the reinforcing elements 4a-4c have the first bending parts 41 whose tops are offset in the fore-and-aft direction so as to follow the downward-fronting curved face of the outer panel 1.

According to the eighth embodiment, which is similar to the fifth embodiment of Figs. 15 and 16, since the respective walls 42, 43 of the first bending parts 41 are effectively buckled by the upside collision, it is possible to improve the energy absorbing efficiency of the front hood structure against the upside collision. While, when the vehicle has a front collision, then the second bending part 44 is detached from the engaging part 21. Consequently, the shrinkage of the structure 40 is attained without hindering the bending of the inner panel 2, whereby it is possible to improve the energy absorbing efficiency of the front hood structure against the front collision.

In addition, since the tops of the first bending parts 41 of the reinforcing elements 4a-4c are offset in the fore-and-aft direction, the wide-angle shock absorbing area can be enlarged without being accompanied with the increased length of the reinforcement 4 in the fore-and-aft direction, accomplishing the effective energy absorption against the upside collision with a wider angle. Further, despite that the generating points of reactive forces are dispersed by the offsetting of the tops of the first bending parts 41, it is possible to enhance the reduction effect for the moment.

Again, if the widths of the reinforcing elements 4a-4c are adjusted as shown in Figs. 19A and 19B, then it is possible to carry out the collision load control in the front hood structure with ease.

Note, the above-mentioned "offset" arrangement for the tops of the first bending parts 41 may be applied to the reinforcement 4 of the first embodiment while dividing it into the reinforcing elements 4a-4c.

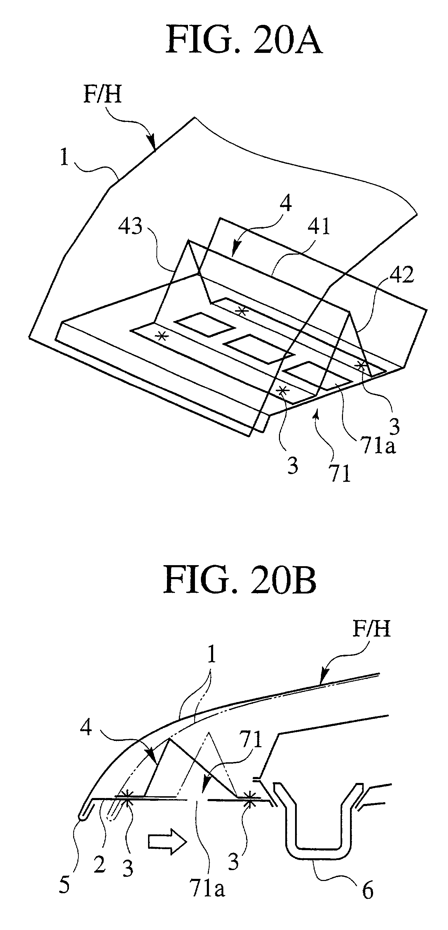

Figs. 20A and 20B show the ninth embodiment of the invention. As the energy absorbing mechanism in the embodiment, the reinforcement 4 is shaped to be triangular in side view, by the bending part 41 projecting toward the outer panel 1 and the walls 42, 43 before and behind the bending part 41.

The front side of the inner panel 2 is shaped to be generally horizontal. The end of the front wall 43 is welded to this inner panel 2 in the vicinity of the hemming joint 5 at the front end of the hood, providing a. fixing part 3. Similarly, the end of the rear wall 42 is welded to the inner panel 2 in the vicinity of the front side of the hood lock 6, also providing a fixing part 3.

According to the embodiment, the inner panel 2 is provided, between these fixing parts 3, 3, with a deformation-inducing part 71 which induces the inner panel 2 to be buckled by the front collision.

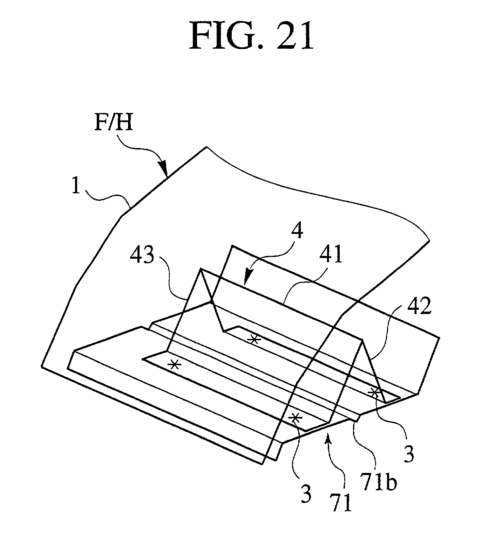

For the deformation-inducing part 71, the inner panel 2 has a plurality of long holes formed so as to adjoin in the vehicle width direction. Alternatively, as shown in Fig. 21 illustrating the tenth embodiment, the deformation-inducing part 71 may be provided by forming a downward bead 71b on the inner panel 2, extending in the vehicle width direction.

Also in the ninth and tenth embodiments of the invention, the so-constructed hood structure has effects similar to those of the first embodiment. In addition, since the walls 42, 43 interposing the bending part 41 are together welded to the inner panel 2, it is possible to ensure the transmission of input from the upside collision to the inner panel 2, realizing the appropriate occurrence of reactive forces.

On the other hand, owing to the provision of the deformation-inducing part 71 between the fixing parts 3 of the walls 42, 43, the front collision allows the inner panel 2 to be bent about the part 71 as the starting point of deformation. Thus, the shrinkage of the reinforcement 4 can be attained to exhibit the effectiveness of energy absorption against the front collision.

The scope of the invention is defined with reference to the following claims.

**Claims**

1. A front hood structure for a vehicle, comprising:

   an outer panel (1);
   an inner panel (2); and
   an energy absorbing mechanism arranged at least in a front portion of the front hood and disposed between the outer and inner panels (1,2);
   the energy absorbing mechanism having a front wall (43) and a rear wall (42) of different inclination angles to receive an upside collision load applied to the outer panel (1) from its upside, at a wide angle, and to transmit the so-received collision load to the inner panel (2);
   the said walls (42,43) being constructed to be buckled by the upside collision load received by the outer panel (1) **characterized in that** the said walls (42, 43) are constructed to be compressively deformable, in a direction allowing the said walls (42,43) to overlap each other, by a front collision load applied to the outer panel (1) from its front side;
   the energy absorbing mechanism comprises a reinforcement (4) provided with a first bending part (41) projecting toward the outer panel (1); and

the first bending part (41) is substantially angular, in side view, and is formed between the front wall (43) and the rear wall (42).

2. A front hood structure as claimed in claim 1, including a hood lock member (6) arranged close to the inner panel (2) to reinforce the front hood, wherein the energy absorbing mechanism is arranged in front of the hood lock member (6), the energy absorbing mechanism preferably having its rear end fixed to the inner panel in the vicinity of a front part of the hood lock member.

3. A front hood structure as claimed in claim 1 or 2, wherein

the reinforcement (4) is provided with a second bending part (44) projecting toward the inner panel (2), the first and second bending parts being connected by the front wall (43);

the termination of the rear wall (42) is fixed to the inner panel (2), at the rear end of the reinforcement (4);

the front hood is provided, at a front end thereof, with a hemming joint (5) for joining the outer panel (1) to the inner panel (2);

the second bending part (44) is engaged, at the front end of the reinforcement (4), with an engaging part (21) of the front hood, the engaging part (21) being arranged in the vicinity of the hemming joint (5) and extending in a widthwise direction; and

the front end of the reinforcement (4) is provided, in front of the second bending part (44), with an additional wall (45) which is generally parallel with the rear wall (42).

4. A front hood as claimed in claim 3, wherein the engaging part comprises a groove formed on the inner panel (2), the groove being defined by either one bead (21) projecting downward or a pair of juxtaposed beads (21) both projecting upward.

5. A front hood structure as claimed in claim 3 or 4, wherein there are established, among the length, a, of the rear wall (42), the length, b, of the front wall (43), the distance, $c_1$, from the hemming joint (5) to the engaging part or groove, and the distance, $c_2$, from the engaging part or groove to the termination of the rear wall (42) fixed to the inner panel (2), the following relationships:

$$a \geq b;$$
$$a \geq c_2; \text{ and}$$
$$c_1 \geq b.$$

6. A front hood structure as claimed in any of claims 3 to 5, wherein

the reinforcement (4) has plural first bending parts (41) and plural second bending parts (44) arranged alternately in a fore-and-aft direction.

7. A front hood structure as claimed in claim 1 or 2, wherein

the energy absorbing mechanism has a cut-and-raised structure (40) obtained by forming an opening (23) in the inner panel (2), the cut-and-raised structure (40) having the first bending part (41) and having a second bending part (44) projecting toward the inner panel (2), the first and second bending parts being connected by the front wall (43);

the rear wall (42) is not cut away from the inner panel (2), while the front wall (43) is cut off from the inner panel (2) so as to define the second bending part (44) at the lowermost end of the front wall;

the inner panel (2) is provided, at a front end of the opening (23), with a claw part (22) for engagement with the second bending part (44); and

the cut-and-raised structure (40) further includes, in front of the second bending part (44), a wall (45) which is generally parallel with the rear wall (42).

8. A front hood structure as claimed in any of claims 3 to 7, wherein the energy absorbing mechanism is provided, on the front and rear walls (43,42) forming the first bending part (41), with beads (7a-c) which induce vertical and lateral buckling of the front and rear walls (43,42) in response to the upside collision load applied to the outer panel (1).

9. A front hood structure as claimed in claim 8, wherein

the front and rear walls (43,42) forming the first bending part (41) are shaped so as to be upward trapezoids in front view;

beads (7a,b) for inducing lateral bucklings are arranged so as to project upward and converge toward each other as the beads approach the first bending part (41); and

a bead (7c) for inducing vertical buckling is arranged between the beads (7a,6) for inducing lateral buckling so as to continuously dent through the front and rear walls (43,42).

10. A front hood structure as claimed in any of claims 3 to 4, wherein

at least one of the front and rear walls (43,42) forming the first bending part (41) is provided, on both lateral ends of the wall, with vertical walls (47a, b) through folding parts (46a,b), respectively.

11. A front hood structure as claimed in claim 1 or 2, wherein

the reinforcement (4) is provided with a second bending part (44) projecting toward the inner panel (2), the first and second bending parts being connected by one of the said walls;

on one of front and rear sides of the reinforcement, the termination of the front or rear wall forming the first bending part (41) is fixed to the inner panel (2);

on the other side of the reinforcement (4), the tip of the second bending part (44) is engaged with an engaging part on the inner panel (2), extending in a widthwise direction;

the reinforcement (4) is divided, through slits (4d) distributed in a widthwise direction, into a plurality of reinforcing elements (4a-c); and

the reinforcing elements (4a-c) having first bending parts (41) whose tips are offset in the fore-and-aft direction, with a different ratio of front wall length to rear wall length for each reinforcing element.

12. A front hood structure as claimed in claim 11, wherein

the front side of the inner panel (1) has a horizontal part (2a) formed to extend from a hemming joint (5) at the front end of the front hood backward generally horizontally and a rising part (26) formed to rise obliquely from the rear end of the horizontal part (2a) toward a hood lock (6);

the second bending part (44) of the reinforcement (4) is formed on an end of the rear wall forming the first bending part (41); and

the end of the front wall forming the first bending part (41) is fixed on the horizontal part (2a) of the inner panel (2), while the tip of the second bending part (44) is engaged with the said engaging part which is arranged in the rising part (26) of the inner panel (2).

13. A front hood structure as claimed in claim 1 or 2, wherein

the energy absorbing mechanism is shaped to be triangular, in side view;

the front and rear walls (43,42) have their ends fixed to the inner panel (2) to provide fixing parts (3); and

the inner panel (2) has a deformation-inducing part (71) between the fixing parts (3) to induce the inner panel (2) to be buckled by the front collision.

14. A vehicle having a front hood with a front hood structure according to any preceding claim.

**Patentansprüche**

1. Motorhaubenkonstruktion für ein Fahrzeug, die Folgendes umfasst:

ein Außenblech (1);
ein Innenblech (2); und
einen energieabsorbierenden Mechanismus, der wenigstens in einem Frontabschnitt der Motorhaube vorgesehen und zwischen dem Außen- und dem Innenblech (1, 2) angeordnet ist;

wobei der energieabsorbierende Mechanismus eine vordere Wand (43) und eine hintere Wand (42) mit unterschiedlichen Neigungswinkeln aufweist, um eine oberseitige Kollisionsbelastung aufzunehmen, die von der Oberseite des Außenblechs (1) in einem breiten Winkel auf dieses aufgebracht wird, und um die so aufgenommene Kollisionsbelastung auf das Innenblech (2) zu übertragen;

wobei die Wände (42, 43) so konstruiert sind, dass sie durch die oberseitige Kollisionsbelastung geknickt werden, die von dem Außenblech (1) aufgenommen wird, **dadurch gekennzeichnet, dass** die Wände (42, 43) so konstruiert sind, dass sie in einer Richtung, die es zulässt, dass die Wände (42, 43) einander überlappen, durch eine Frontkollisionsbelastung kompressiv verformbar sind, die von der Frontseite auf das Außenblech (1) aufgebracht wird;

der energieabsorbierende Mechanismus eine Verstärkung (4) umfasst, die mit einem ersten Abkantteil (41) versehen ist, der in Richtung auf das Außenblech (1) vorsteht; und

der erste Abkantteil (41) in Seitenansicht im Wesentlichen abgewinkelt und zwischen der vorderen Wand (43) und der hinteren Wand (42) ausgebildet ist.

2. Motorhaubenkonstruktion nach Anspruch 1 mit einem Haubenverriegelungselement (6), das in der Nähe des Innenbleches (2) angeordnet ist, um die Motorhaube zu verstärken, wobei der energieabsorbierende Mechanismus vor dem Haubenverriegelungselement (6) angeordnet ist, wobei das hintere Ende des energieabsorbierenden Mechanismus vorzugsweise am Innenblech in der Nähe eines vorderen Teils des Haubenverziegelungselementes befestigt ist.

3. Motorhaubenkonstruktion nach Anspruch 1 oder 2, bei der

die Verstärkung (4) mit einem zweiten Abkantteil (44) versehen ist, der in Richtung auf das Innenblech (2) vorsteht, wobei der erste und der zweite Abkantteil durch die vordere Wand (43) verbunden sind;

der Abschluss der hinteren Wand (42) am Innenblech (2) am hinteren Ende der Verstärkung (4) befestigt ist;

die Motorhaube an ihrem vorderen Ende mit einer Umschlagverbindung (5) zum Verbinden des Außenbleches (1) mit dem Innenblech (2) versehen ist;

der zweite Abkantteil (44) am vorderen Ende der Verstärkung (4) mit einem Eingriffsteil (21) der Motorhaube im Eingriff ist, wobei der Eingriffsteil (21) in der Nähe der Unischlagverbindung (5) angeordnet ist und in einer Breitenrichtung verläuft; und

das vordere Ende der Verstärkung (4) vor dem zweiten Abkantteil (44) mit einer zusätzlichen Wand (45) versehen ist, die allgemein parallel zur hinteren Wand (42) ist.

4. Motorhaube nach Anspruch 3, bei der der Eingriffsteil eine im Innenblech (2) ausgebildete Nut umfasst, wobei die Nut entweder durch einen nach unten vorstehenden Wulst (21) oder durch ein Paar nebeneinander liegender, beide nach oben vorstehender Wülste (21) definiert wird.

5. Motorhaubenkonstruktion nach Anspruch 3 oder 4, bei der unter der Länge a der hinteren Wand (42), der Länge b der vorderen Wand (43), dem Abstand $c_1$ zwischen der Umschlagverbindung (5) und dem Eingriffsteil bzw. der Nut und dem Abstand $c_2$ zwischen dem Eingriffsteil bzw. der Nut und dem Ende der hinteren Wand (42), das am Innenblech (2) befestigt ist, die folgenden Beziehungen hergestellt werden:

$$a \geq b;$$
$$a \geq c_2;\ und$$
$$c_1 \geq b.$$

6. Motorhaubenkonstzuktion nach einem der Ansprüche 3 bis 5, bei der

die Verstärkung (4) mehrere erste Abkantteile (41) und mehrere zweite Abkantteile (44) hat, die abwechselnd nach vorne und nach hinten weisend angeordnet sind.

7. Motorhaubenkonstruktion nach Anspruch 1 oder 2, bei der

der energieabsorbierende Mechanismus eine abgeschnittene und hochgebogene Struktur (40) hat, die durch Ausbilden einer Öffnung (23) im Innenblech (2) erhalten wird, wobei der erste Abkantsteil (41) und ein zweiter Abkantteil (44) der abgeschnittenen und hochgebogenen Struktur (40) in Richtung auf das Innenblech (2) vorstehen, wobei der erste und der zweite Abkantteil durch die vordere Wand (43) miteinander verbunden sind;

die hintere Wand (42) nicht von dem Innenblech (2) weggeschnitten ist, während die vordere Wand (43) von dem Innenblech (2) abgeschnitten ist, um den zweiten Abkantteil (44) am untersten Ende der Frontwand zu definieren;

das Innenblech (2) an einem vorderen Ende der Öffnung (23) mit einem Klauenteil (22) für den Eingriff in den zweiten Abkantteil (44) versehen ist; und

die abgeschnittene und hochgebogene Struktur (40) ferner vor dem zweiten Abkantteil (44) eine Wand (45) aufweist, die allgemein parallel zur hinteren Wand (42) verläuft.

8. Motorhaubenkonstruktion nach einem der Ansprüche 3 bis 7, bei der der energieabsorbierende Mechanismus an der den ersten Abkantteil (41) bildenden vorderen und hinteren Wand (43, 42) mit Wülsten (7a-c) versehen ist, die ein vertikales und laterales Knicken der vorderen und der hinteren Wand (43, 42) als Reaktion auf die auf das Außenblech (1) aufgebrachte oberseitige Kollisionsbelastung induziert.

9. Motorhaubenkonstruktion nach Anspruch 8, bei der

die den ersten Abkantteil (41) bildenden vorderen und hinteren Wände (43, 42) so gestaltet sind, dass sie in Frontansicht nach oben gerichtete Trapeze sind;

Wülste (7a,b) zum Induzieren von lateralen Knicken so angeordnet sind, dass sie nach oben vorstehen und aufeinander zu konvergieren, während sich die Wülste dem ersten Abkantteil (41) nahem; und

ein Wulst (7c) zum Induzieren eines vertikalen Knicks zwischen den Wülsten (7a,6) angeordnet ist, um ein laterales Knicken zu induzieren, damit die vorderen und hinteren Wände (43, 42) kontinuierlich verbeult werden.

10. Motorhaubenkonstruktion nach Anspruch 3 oder 4, bei der

die den ersten Abkantteil (41) bildende(n) vordere und/oder hintere Wand/Wände (43, 42) an beiden lateralen Enden der Wand jeweils durch Falzteile (46a,b) mit vertikalen Wänden (47a,b) versehen sind.

11. Motorhaubenkonstruktion nach Anspruch 1 oder 2, bei der

die Verstärkung (4) mit einem zweiten Abkantteil (44) versehen ist, der in Richtung auf das Innenblech (2) vorsteht, wobei der erste und der zweite Abkantteil durch eine der genannten Wände verbunden ist;

an der Vorderseite oder der Rückseite der Verstärkung der Abschluss der den ersten Abkantteil (41) bildenden vorderen oder hinteren Wand am Innenblech (2) befestigt ist;

auf der anderen Seite der Verstärkung (4) die Spitze des zweiten Abkantteils (44) mit einem Eingriffsteil am Innenblech (2) im Eingriff ist, das in Breitenrichtung verläuft;

die Verstärkung (4) durch in Breitenrichtung verteilte Schlitze (4d) in eine Mehrzahl von Verstärkungselementen (4a-c) unterteilt ist; und

die Verstärkungselemente (4a-c) erste Abkantteile (41) aufweisen, deren Spitzen in der Richtung von vorne nach hinten versetzt sind, mit einem anderen Verhältnis von vorderer Wandlänge zu hinterer Wandlänge für jedes Verstärkungselement.

12. Motorhaubenkonstruktion nach Anspruch 11, bei der

die Frontseite des Innenbleches (1) einen horizontalen Teil (2a), der so gebildet ist, dass er von einer Umschlagverbindung (5) am vorderen Ende der Motorhaube nach hinten allgemein horizontal verläuft, und einen ansteigenden Teil (26) aufweist, der so gebildet ist, dass er schräg vom hinteren Ende des horizontalen Teils (2a) in Richtung auf eine Haubenverriegelung (6) ansteigt;

der zweite Abkantteil (44) der Verstärkung (4) an einem Ende der den ersten Abkantteil (41) bildenden hinteren Wand ausgebildet ist; und

das Ende der den ersten Abkantteil (41) bildenden vorderen Wand am horizontalen Teil (2a) des Innenblechs (2) befestigt ist, während die Spitze des zweiten Abkantteils (44) in den genannten Eingriffsteil eingreift, der im ansteigenden Teil (26) des Innenblechs (2) angeordnet ist.

13. Motorhaubenkonstruktion nach Anspruch 1 oder 2, bei der

der energieabsorbierende Mechanismus in Seitenansicht dreieckig ausgestaltet ist;

die Enden der vorderen und hinteren Wand (43, 42) am Innenblech (2) befestigt sind, so dass Befestigungsteile (3) entstehen; und

das Innenblech (2) einen verformungsinduzierenden Teil (71) zwischen den Befestigungsteilen (3) hat, um zu veranlassen, dass das Innenblech (2) durch die Frontalkollision geknickt wird.

14. Fahrzeug mit einer Motorhaube mit einer Motorhaubenkonstruktion nach einem der vorherigen Ansprüche.

**Revendications**

1. Structure de capot avant pour un véhicule, comprenant:

un panneau externe (1);
un panneau interne (2); et
un mécanisme d'absorption de l'énergie agencé au moins dans une partie avant du capot avant et agencé entre les panneaux externe et interne (1, 2);

le mécanisme d'absorption de l'énergie comportant une paroi avant (43) et une paroi arrière (42) ayant des angles d'inclinaison différents pour recevoir la charge d'une collision d'en haut appliquée au panneau externe (1) à partir de son côté supérieur, à un grand angle, et pour transmettre la charge de collision ainsi reçue au panneau interne (2);

lesdites parois (42, 43) étant construites de sorte à être fléchies par suite de la réception de la charge de la collision d'en haut par le panneau externe (1), et **caractérisée en ce que** lesdites parois (42, 43) sont construites de sorte à pouvoir être déformées par compression, dans une direction permettant le chevauchement mutuel desdites parois (42, 43) par suite de l'application d'une charge de collision frontale au panneau externe (1) à partir de son côté avant;

le mécanisme d'absorption de l'énergie comprenant un renforcement (4) comportant une première partie de flexion (41) débordant vers le panneau externe (1); et

la première partie de flexion (41) étant pratiquement angulaire dans une vue latérale et étant agencée entre la paroi avant (43) et la paroi arrière (42).

2. Structure de capot avant selon la revendication 1, englobant un élément de serrure du capot (6) agencé près du panneau interne (2) pour renforcer le capot avant, le mécanisme d'absorption de l'énergie étant agencé en face de l'élément de serrure du capot (6), le mécanisme d'absorption de l'énergie comportant de préférence une extrémité arrière fixée sur le panneau interne au voisinage d'une partie avant de l'élément de serrure du capot.

3. Structure de capot avant selon les revendications 1 ou 2, dans laquelle:

le renforcement (4) comporte une deuxième partie de flexion (44) débordant vers le panneau interne (2), les première et deuxième parties de flexion étant connectées par la paroi avant (43);

la région d'extrémité de la paroi arrière (42) est fixée sur la panneau interne (2), au niveau de l'extrémité arrière du renforcement (4);

le capot avant comporte au niveau d'une extrémité avant correspondante un raccord de bordure (5) pour relier le panneau externe (1) au panneau interne (2);

la deuxième partie de flexion (44) est engagée au niveau de l'extrémité avant du renforcement (4) dans une partie d'engagement (21) du capot avant, la partie d'engagement (21) étant agencée au voisinage du raccord de bordure (5) et s'étendant dans une direction de la largeur; et

l'extrémité avant du renforcement (4) comporte en face de la deuxième partie de flexion (44) une paroi additionnelle (45) généralement parallèle à la paroi arrière (42).

4. Structure de capot avant selon la revendication 3, dans laquelle la partie d'engagement comprend une rainure formée sur le panneau interne (2), la rainure étant définie par une moulure (21) débordant vers le bas ou par une paire de moulures juxtaposées (21) débordant toutes les deux vers le haut.

5. Structure de capot avant selon les revendications 3 ou 4, dans laquelle la relation suivante est établie entre une longueur a de la paroi arrière (42), la longueur b de la paroi avant (43), la distance $c_1$ entre le raccord de bordure (5) et la partie d'engagement ou la rainure et la distance $c_2$ entre la partie d'engagement ou la rainure et la partie d'extrémité de la paroi arrière (42) fixée sur le panneau interne (2);

$$a \geq b;$$
$$a \geq c_2; \text{ et}$$
$$c_1 \geq b.$$

6. Structure de capot avant selon l'une quelconque des revendications 3 à 5, dans laquelle

le renforcement (4) comporte plusieurs premières parties de flexion (41) et plusieurs deuxièmes parties de flexion (44) agencées par alternance dans une direction allant vers l'avant et vers l'arrière.

7. Structure de capot avant selon les revendications 1 ou 2, dans laquelle

le mécanisme d'absorption de l'énergie comporte une structure découpée et surélevée (40) établie par formation d'une ouverture (23) dans le panneau interne (2), la partie découpée et surélevée (40) comportant une première partie de flexion (41) et une deuxième partie de flexion (44) débordant vers le panneau interne (2), les première et deuxième parties de flexion étant connectées par la paroi avant (43);

la paroi arrière (42) n'étant pas découpée du panneau interne (2), la paroi avant (43) étant découpée du panneau interne (2) de sorte à définir la deuxième partie de flexion (44) au niveau de l'extrémité inférieure extrême de la paroi avant;

le panneau interne (2) comportant au niveau d'une extrémité avant de l'ouverture (23) une partie de griffe (22) destiné à s'engager dans la deuxième partie de flexion (44); et

la structure découpée et surélevée (40) englobant en outre, en face de la deuxième partie de flexion (44), une paroi (45) généralement parallèle à la paroi arrière (42).

8. Structure de capot avant selon l'une quelconque des revendications 3 à 7, dans laquelle le mécanisme d'absorption de l'énergie comporte sur les parois avant et arrière (43, 42) constituant la première partie de flexion (41), des moulures (7a-c) entraînant un fléchissement vertical et latéral des parois avant et arrière (43, 42) en réponse à la charge de la collision d'en haut appliquée au panneau externe (1).

9. Structure de capot avant selon la revendication 8, dans laquelle

les parois avant et arrière (43, 42) constituant la première partie de flexion (41) sont formées de sorte à constituer des trapézoïdes ascendants dans une vue frontale;

les moulures (7a, b) destinées à entraîner un fléchissement latéral sont agencées de sorte à déborder vers le haut et à converger l'une vers l'autre lors du rapprochement des moulures de la première partie de flexion (41); et

une moulure (7c) destinée à entraîner un fléchissement vertical est agencée entre les moulures (7a, 6) entraînant un fléchissement latéral, de sorte à pénétrer en continu à travers les parois avant et arrière (43, 42),

10. Structure de capot avant selon l'une quelconque des revendications 3 à 4, dans laquelle

au moins une des parois avant et arrière (43, 42) constituant la première partie de flexion (41) comporte sur les deux extrémités latérales de la paroi des parois verticales (47a, b) établies respectivement par des parties de pliage (46a, b).

11. Structure de capot avant selon les revendications 1 ou 2, dans laquelle

le renforcement (4) comporte une deuxième partie de flexion (44) débordant vers le panneau interne (2), les premières et deuxième parties de pliage étant connectées par une desdites parois latérales;

la partie d'extrémité de la paroi avant ou arrière constituant la première partie de flexion (41) est fixée sur le panneau interne (2) sur un des côtés avant et arrière du renforcement;

la pointe de la deuxième partie de flexion (44) est engagée sur l'autre côté du renforcement (4) dans une partie d'engagement sur le panneau interne (2), s'étendant dans une direction de la largeur;

le renforcement (4) est divisé par des fentes (4d) réparties dans une direction de la largeur, en plusieurs éléments de renforcement (4a-c); et

les éléments de renforcement (4a-c) comportent des premières parties de flexion (41), dont les pointes sont décalées dans la direction allant vers l'avant et vers l'arrière, chaque élément de renforcement ayant un rapport différent entre la longueur de la paroi avant et celle de la paroi arrière.

**12.** Structure de capot avant selon la revendication 11, dans laquelle:

le côté avant du panneau interne (1) comporte une partie horizontale (2a) formée de sorte à s'étendre à partir d'un raccord de bordure (5) au niveau de l'extrémité avant du capot avant vers l'arrière, de manière généralement horizontale, et une partie ascendante (26) destinée à s'élever de manière oblique à partir de l'extrémité arrière de la partie horizontale (2a) vers une serrure du capot (6);
la deuxième partie de flexion (44) du renforcement (4) est formée sur une extrémité de la paroi arrière constituant la première partie de flexion (41); et
l'extrémité de la paroi avant constituant la première partie de flexion (41) est fixée sur la partie horizontale (2a) du panneau interne (2), la pointe de la deuxième partie de flexion (44) étant engagée dans ladite partie d'engagement agencée dans la partie ascendante (26) du panneau interne (2).

**13.** Structure de capot avant selon les revendications 1 ou 2, dans laquelle
le mécanisme d'absorption de l'énergie a une forme triangulaire dans une vue latérale;
les parois avant et arrière (43, 42) comportent des extrémités fixées sur le panneau interne (2) pour établir des parties de fixation (3); et
le panneau interne (2) comporte une partie induisant une déformation (71) entre les parties de fixation (3) pour entraîner un fléchissement du panneau interne (2) par la collision frontale.

**14.** Véhicule comportant un capot avant avec une structure de capot avant selon l'une quelconque des revendications précédentes.

# FIG. 1A

# FIG. 1B

# FIG. 1C

# FIG. 2A

# FIG. 2B

# FIG. 3

# FIG. 4

# FIG. 5

# FIG. 6

# FIG. 7

# FIG. 8

# FIG. 9

# FIG. 10

# FIG. 11

# FIG. 12

# FIG. 13

# FIG. 14

# FIG. 15

# FIG. 16

F/H

1

40

40

2

2b

23

22

2a

5

FIG. 17A

FIG. 17B

FIG. 17C

FIG. 17D

# FIG. 18A

# FIG. 18B

FIG. 19A

FIG. 19B

# FIG. 20A

# FIG. 20B

# FIG. 21